# FASCICULE DE BREVET EUROPEEN

(11) **EP 1 174 341 B1**
(45) Date de publication et mention de la délivrance du brevet: **22.09.2004**
(21) Numéro de dépôt: 01401815.4
(22) Date de dépôt: 06.07.2001
(51) Int. Cl.: B64D 33/04, B64D 29/00, F02K 1/78

(54) **Perfectionnements aux arrière-corps de nacelle, à tuyère commune, de réaction d'avions**
Verbesserung zum Heckejektorteil einer Gondel mit gemeinsamer Schubdüse für ein Flugzeugtriebswerk
Aircraft jet engine nacelle with an enhanced rear ejection block with common nozzle

(30) Priorité: 17.07.2000 FR 0009301
(43) Date de publication de la demande: 23.01.2002
(73) Titulaire: HUREL-HISPANO MEUDON, 92360 Meudon-la-Forêt (FR)
(72) Inventeur: Fournier, Alain, 92350 Le Plessis Robinson (FR); Laboure, Bernard, 78140 Velizy (FR)
(74) Mandataire: Sauvage, Renée

(56) Documents cités:
- EP-A- 0 361 901
- US-A- 4 442 987
- US-A- 4 922 713
- US-A- 5 239 822
- US-A- 6 068 213

## Description

Perfectionnements aux arrière-corps de nacelle, à tuyère commune, de réaction d'avions. La présente invention concerne d'une manière générale un arrière-corps de nacelle de réacteur d'avion, du type comportant une tuyère commune pour l'échappement des gaz chauds et froids mélangés provenant respectivement du canal de soufflante et de la chambre de combustion du réacteur, ladite tuyère ayant un axe longitudinal se confondant sensiblement avec l'axe dudit réacteur.

L'invention concerne donc ce qu'il est convenu d'appeler un arrière-corps long de nacelle à flux mélangé (en abrégé, LDMF, d'après la nomenclature anglaise Long Duct Mixed Flow).

Dans les arrière-corps connus de ce type, la tuyère commune (en abrégé CNA, d'après la nomenclature anglaise Common Nozzle Assembly) est soit fixée, par l'intermédiaire de bras radiaux, à une tuyère primaire, elle-même solidarisée au carter turbine, soit fixée sur l'extrémité aval du capotage d'inverseur qui entoure l'ensemble compresseurs/chambre de combustion/turbine. Dans les deux cas, la CNA est en une seule partie alors que, généralement le capotage dans lequel est inclus l'ensemble précité est constitué de deux demi-capotages qui sont, d'une part, individuellement articulés sur une structure support et, d'autre part, verrouillables entre eux à l'opposé de ladite articulation.

La structure support précitée est soit le mât moteur si le moteur est installé en nacelle sous voilure, soit une structure pylône, elle-même montée sur le fuselage arrière de l'avion, si le moteur est installé en nacelle latérale.

L'accrochage de la CNA pose de nombreux problèmes, en particulier compte tenu des normes de sécurité de plus en plus contraignantes en cas de rupture et détachement d'aubes de soufflante ou fan. Lorsque survient un tel incident (connu sous le nom de "fan blade-off" en anglais), le fragment d'aube qui se détache, d'une part, vient frapper les pièces environnantes, ce qui impose de prévoir des renforcements de nature à éviter qu'il puisse transpercer des zones vitales de l'avion et, d'autre part, entraîne un déséquilibre avec effet de balourd qui provoque de violentes vibrations. Il est, dans ce cas, nécessaire, d'arrêter le moteur correspondant avec pour résultat que la turbine fonctionne en moulinet (situation connue sous le nom de "windmilling" en anglais), ce qui réduit mais n'élimine pas totalement les vibrations néfastes.

Le problème de l'accrochage de la CNA devient encore plus ardu lorsque l'on souhaite implanter un inverseur de poussée dans cette CNA, en raison du poids ajouté par l'inverseur et des efforts particuliers à transmettre.

Selon un premier aspect de l'invention, il est prévu, pour réduire l'effet du montage en porte-à-faux de la tuyère commune (CNA), de réaliser cette tuyère sous la forme de deux demi-tuyères sensiblement symétriques par rapport à un plan contenant ledit axe longitudinal, lesdites demi-tuyères étant, d'une part, individuellement articulées par l'un de leurs bords longitudinaux sur ladite structure support et, d'autre part, verrouillables entre elles le long de leurs bords longitudinaux opposés.

La CNA est, en outre, accrochée à l'extrémité aval du capotage par coopération entre une pièce formant joint, comportant une partie en V, prévue dans l'extrémité aval dudit capotage et une gorge en V complémentaire ménagée dans l'extrémité en vis-à-vis de la CNA (ensemble connu de l'homme du métier sous le nom de structure "V-blade/V-groove"). Une telle structure, par exemple illustrée à la figure 4 de US-A-4 998 409, est conçue pour transmettre des efforts axiaux et y résister. Or, en cas de rupture et détachement d'une aube de fan, les vibrations provoquent des efforts dans des directions incontrôlées qui peuvent être mal supportées par la structure V-blade/V-groove. On a certes développé des structures V-blade/V-groove plus sophistiquées (par exemple, utilisant des profils en queue d'aronde à 90° pour éviter tout déplacement en rotation) mais l'accrochage à l'extrémité aval du capotage reste un problème.

Pour remédier à ces inconvénients, selon un second aspect, l'invention apporte un arrière-corps du type précité et dans lequel chaque demi-capotage et chaque demi-tuyère se faisant suite sont d'un seul tenant.

Ainsi, la CNA n'est plus une pièce distincte nécessitant un accrochage à un arrière-corps distinct, et il s'ensuit l'élimination des problèmes inhérents à cet accrochage.

La réunion du capotage et de la CNA en un seul ensemble formé de deux parties articulées, outre qu'elle résout le problème discuté ci-dessus, présente de nombreux avantages qui sont les suivants :
- en supprimant les moyens d'accrochage à un arrière-corps distinct, on gagne non seulement en matière et en main d'oeuvre, mais surtout en poids de la nacelle ; or, en aéronautique, tout gain de poids a une incidence économique appréciable en exploitation ;
- en remplaçant la CNA en une seule pièce par l'incorporation de la CNA dans la structure en deux moitiés du capotage, on allonge certes la structure en question mais on réduit son encombrement en section transversale, ce qui facilite son transport et sa manutention, l'encombrement en section transversale étant souvent plus difficile à résoudre que l'encombrement en longueur ;
- mais surtout, en disposant d'un arrière-corps unitaire, on dispose d'une bien plus grande latitude quant au choix de la zone d'implantation éventuelle d'un inverseur de poussée : on pourra, par exemple, ne faire agir l'inverseur que sur le flux froid si on implante les portes dans l'arrière-corps en amont du bord aval de la turbine ou bien le faire agir sur le mélange de flux froid et chaud si on l'implante en aval (comme on l'a vu plus haut, un tel montage aval est difficilement envisageable dans le cas d'une CNA distincte en raison du poids supplémentaire déporté qu'apportent les portes et autres éléments connexes de l'inverseur).

Cette possibilité d'implanter l'inverseur de telle sorte qu'il agisse sur le mélange de flux, tout en conservant une partie de structure de CNA en aval, a, à son tour, un avantage considérable.

Lorsque l'inverseur n'agit que sur le flux froid, il demeure, au moment de l'inversion, une poussée en jet direct assurée par le flux chaud tandis que le freinage se fait au moyen de l'inversion du flux froid. Le freinage résulte donc de la différence entre la poussée du flux chaud et l'inversion de poussée du flux froid, et, pour être suffisant, il nécessite d'être en régime moteur élevé, donc bruyant.

Lorsque l'inverseur agit à la fois sur le flux froid et sur le flux chaud, la capacité de freinage est meilleure. On peut ainsi soit, pour le même régime moteur, obtenir un freinage plus radical, soit, pour une même intensité de freinage, faire tourner le moteur à régime moindre, donc avec une réduction substantielle du bruit.

Or, cette question du bruit est de plus en plus pénalisante pour les compagnies aériennes, dans la mesure où déjà un certain nombre d'aéroports interdisent l'utilisation de l'inversion de poussée, le soir, passée une certaine heure. Il s'ensuit, parfois, en cas de décollage retardé, l'impossibilité du recours à l'inversion de poussée, ce qui est un élément de risque. Une inversion de poussée à faible niveau de bruit, donc acceptable, permettrait d'utiliser l'inversion quelle que soit l'heure d'atterrissage et libérerait les compagnies aériennes de ce souci et de ce risque.

L'invention a donc pour objet un arrière-corps de nacelle longue à flux mélangés pour réacteur d'avion comportant une zone amont et une zone aval par référence au sens d'écoulement des gaz, qui est constitué en deux parties sensiblement symétriques par rapport à un plan contenant l'axe longitudinal du réacteur, lesdites parties étant, d'une part, individuellement articulées par l'un de leurs bords longitudinaux sur ladite structure support et, d'autre part, verrouillables entre elles le long de leurs bords longitudinaux opposés, chacune des desdites parties comportant de l'extérieur vers l'intérieur, en zone amont, trois surfaces aérodynamiques, à savoir une surface extérieure de nacelle, une surface extérieure de canal de flux froid et une surface intérieure de canal de flux froid et, en zone aval, deux surfaces aérodynamiques, à savoir une surface extérieure de nacelle et une surface de flux mélangés chaud et froid.

L'invention sera mieux comprise à la lecture de la description ci-après faite en référence aux dessins annexés dans lesquels :
- la figure 1 est une vue en perspective éclatée du système de propulsion du moteur Rolls Royce Trent 700 de l'Airbus A330 (nacelle sous voilure) illustrant l'état antérieur de la technique ;
- la figure 2 est une vue semblable à celle de la figure 1 modifiée par incorporation d'une première forme d'exécution de la présente invention (nacelle sous voilure) ;
- les figures 3a et 3b sont des vues en perspective d'une deuxième forme d'exécution de la présente invention incorporée à une nacelle sous voilure, avec inverseur à deux portes respectivement déployées et escamotées, et agissant sur le flux froid ;
- les figures 4a et 4b sont des vues en perspective d'une troisième forme d'exécution de la présente invention incorporée à une nacelle sous voilure, avec inverseur à deux portes amont, respectivement déployées et escamotées, et agissant sur le mélange de flux froid et chaud ;
- la figure 5 est une vue en coupe longitudinale d'une nacelle latérale selon une quatrième forme d'exécution ; et
- les figures 6 et 7 sont respectivement des coupes prises selon les lignes VI-VI et VII-VII de la figure 5.

Dans la description ci-après, les mêmes références seront utilisées d'une figure à l'autre pour désigner des pièces identiques ou similaires.

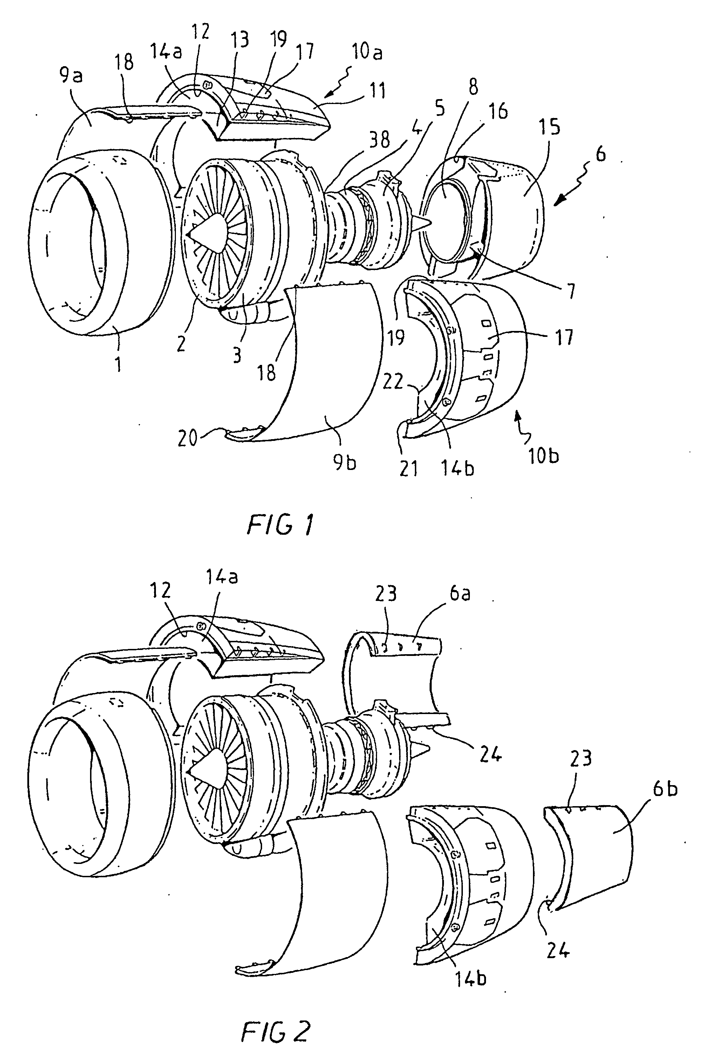

La figure 1 représente un système de propulsion de l'art antérieur dont on voit l'entrée d'air 1, la soufflante ou fan 2, le carter de soufflante 3, les compresseurs 38, la chambre de combustion 4, le carter turbine 5 et la tuyère d'échappement qui est constituée d'une tuyère primaire 8 (gaz chauds) et d'une tuyère secondaire 6 (gaz chauds et froids mélangés). C'est à cette tuyère secondaire que l'on se réfère sous l'expression "tuyère commune d'échappement" ou CNA dans le cadre de la présente description et des revendications. La tuyère commune d'échappement 6 est montée par des bras radiaux 7 sur la tuyère primaire 8, l'ensemble se fixant sur le carter turbine 5.

Il est à noter que ces bras se trouvent ainsi solidarisés aux parties chaudes du réacteur et subissent des efforts thermiques indésirables. En outre, ils génèrent des pertes de performance moteur.

Le système comporte en outre un capot moteur en deux parties 9a, 9b et un capotage d'inverseur de poussée en deux parties 10a, 10b adapté à entourer l'ensemble formé par les compresseurs 38, la chambre de combustion 4 et le carter turbine 5, la division en deux parties du capot moteur et du capotage d'inverseur étant faite selon un plan de coupe sensiblement vertical. Chaque demi-capotage d'inverseur 10a, 10b présente trois surfaces aérodynamiques ou peaux, à savoir une surface extérieure de nacelle 11, une surface extérieure de canal de soufflante 12 et une surface intérieure de canal de soufflante 13. Les surfaces 12 et 13 délimitent un demi-canal de soufflante (flux froid), respectivement, 14a et 14b. De son côté, la CNA 6 comporte deux surfaces aérodynamiques, à savoir la surface extérieure de nacelle 15 et la surface intérieure de canal de flux chaud et froid mélangés 16. Des portes d'inverseur de poussée 17 sont implantées dans le capotage 10a,b pour agir sur le flux froid.

Dans ce système de l'art antérieur, le capot moteur et le capotage d'inverseur sont formés chacun de deux moitiés, respectivement 9a,9b et 10a,10b, mais la tuyère commune ou CNA 6 est d'une seule pièce. Les demi-capots 9a,9b et les demi-capotages 10a,10b sont montés articulés sur la poutre moteur (non représentée) au moyen de charnières, respectivement 18 et 19. A l'opposé des charnières, les demi-capots 9a, 9b et les demi-capotages 10a, 10b comportent des verrous tels que 20 permettant de les verrouiller en position fermée. Il est bien entendu que ce montage en deux parties articulées a pour but de permettre un accès plus facile aux parties chaudes du réacteur.

Le capotage d'inverseur 10a,b est solidarisé au moteur au moyen de structures "V-Blade/V-groove" dont la position sur l'extrémité amont du demi-capotage 10b est indiquée en 21, pour connexion sur le carter extérieur de soufflante 3, et facultativement en 22, pour connexion sur un carter interne de moteur. Des structures complémentaires sont positionnées en vis-à-vis sur lesdits carters.

On comprend que, selon l'art antérieur, la CNA 6 est montée en porte-à-faux sur le carter turbine 5.

Une première modification, selon l'invention, de cette structure connue consiste à réaliser la CNA, comme le capot moteur 9a,b et le capotage d'inverseur 10a,b, c'est-à-dire en deux parties 6a et 6b, comme le montre la figure 2 où la tuyère primaire 8 a été omise pour ne pas compliquer le dessin. Ces demi-CNA sont montées articulées au moyen, par exemple, de trois charnières 23 installées à 12 heures sur la poutre moteur et sont munies d'autant de verrous 24 installés à 6 heures et permettant de fermer la CNA. De cette manière, la CNA 6 n'est pas uniquement tenue par son extrémité amont, mais également le long de deux de ses génératrices.

La CNA n'étant plus montée en porte-à-faux, il est possible de modifier l'emplacement d'implantation de l'inverseur, c'est-à-dire de laisser le capotage 10a,b inerte et d'implanter l'inverseur dans la CNA.

Les demi-CNA 6a, 6b sont reliées par un système V-blade/V-groove à la peau extérieure 12 des demi-canaux de soufflante 14a,b afin d'assurer l'étanchéité et la transmission des efforts axiaux.

Dans une forme d'exécution préférée de l'invention cependant, la modification ne se limite pas à subdiviser la CNA en deux moitiés articulées mais à regrouper en une seule pièce chaque demi-capotage, 10a ou 10b, et la demi-CNA, 6a ou 6b, qui lui fait suite.

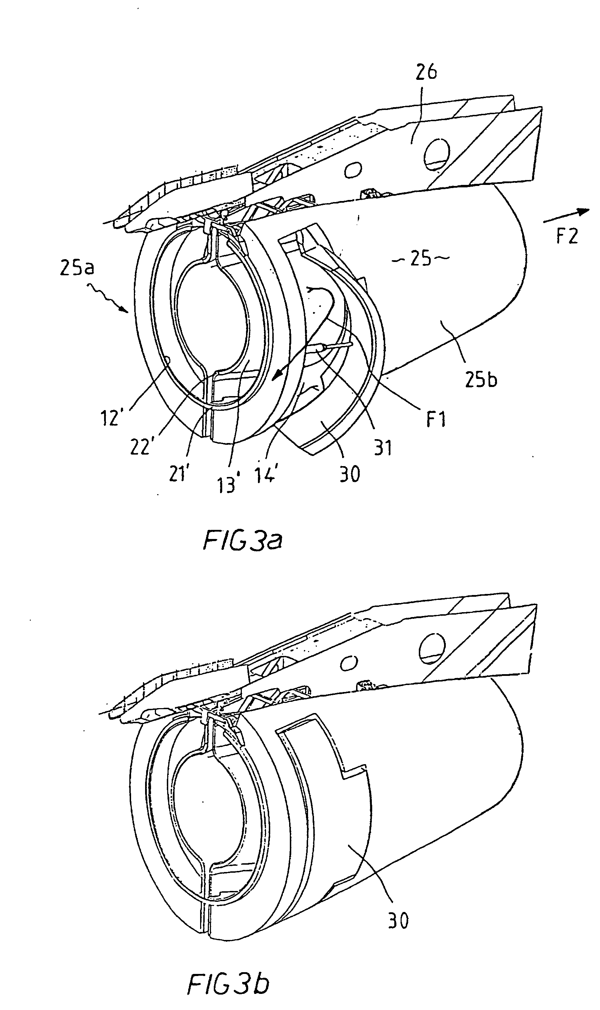

Ainsi, si l'on se réfère aux figures 3a et 3b, on voit un capotage ou arrière-corps unitaire 25 dont la partie amont forme capotage de l'ensemble compresseurs/chambre de combustion/turbine et dont la partie aval forme CNA. L'arrière-corps unitaire 25 est formé de deux moitiés 25a, 25b sensiblement symétriques par rapport à un plan de coupe sensiblement vertical et qui sont montées articulées au moyen de charnières sur le mât moteur 26 et verrouillables en position fermée au moyen de verrous montés à l'opposé des charnières. Selon les dimensions et autres caractéristiques du moteur, on prévoira de quatre à huit points d'articulation à 12 heures et de quatre à huit verrous à 6 heures. '

L'arrière-corps unitaire est solidarisé au carter de soufflante 3 au moyen de structures "V-Blade/V-groove" dont la position sur l'extrémité amont du demi-capotage 10b est indiquée en 21' pour connexion sur le carter externe de soufflante 3 et facultativement en 22', pour connexion sur un carter interne de moteur. Des structures complémentaires sont positionnées en vis-à-vis sur lesdits carters.

Comme on le voit, l'arrière-corps unitaire 25 définit, entre ses peaux 12' et 13', le canal de soufflante ou de flux froid 14'. On comprend que le canal de soufflante 14' se compose en fait de deux demi-canaux de soufflante. Dans la partie amont de l'arrière-corps unitaire 25 sont montées deux portes pivotantes d'inverseur 30 susceptibles de passer, sous l'effet d'un vérin 31, d'une position escamotée dans laquelle elles complètent la paroi du capotage (figure 3b) à une position déployée dans laquelle elles bloquent presque en totalité le canal de flux froid (figure 3a) et dévient ce flux froid vers l'amont, selon la flèche F1, le flux chaud continuant d'être éjecté selon la flèche F2.

Au lieu d'un inverseur à deux portes tel que représenté, par exemple un inverseur PAPILLON (marque de la Déposante) tel que décrit et revendiqué dans le brevet français n° 95 06561 de la Déposante, on pourrait en variante implanter un inverseur à quatre portes (de type "pétales") tel que décrit et revendiqué dans le brevet français n° 81 10693 de la Déposante, et représenté à la figure 1.

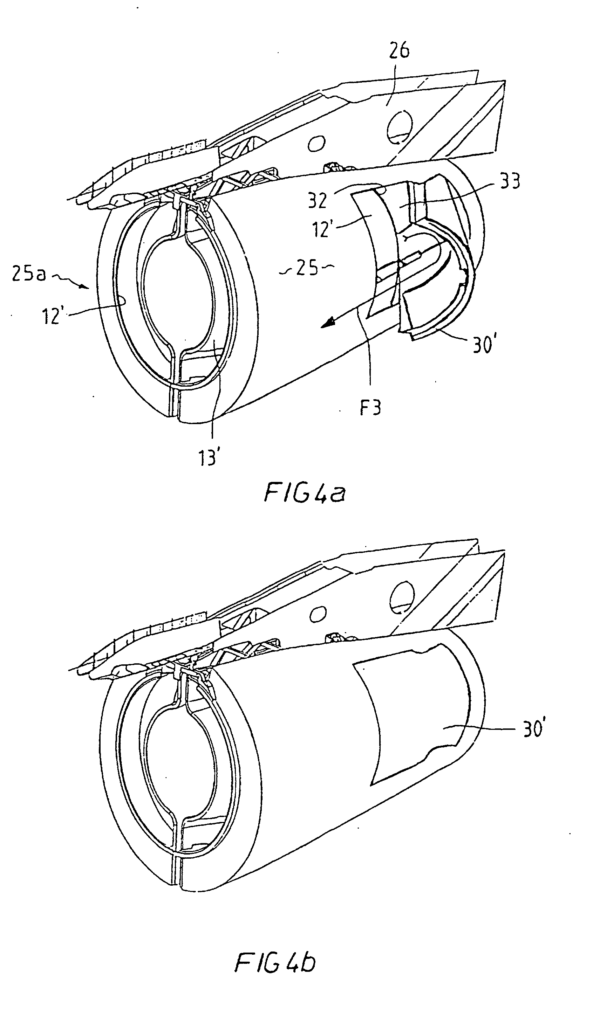

La forme d'exécution des figures 4a et 4b ne se distingue de celle des figures 3a et 3b que par l'implantation des portes d'inverseur. Outre les composants déjà identifiés en référence aux figures précédentes, on voit ici l'extrémité aval 32 de la peau 12' et le canal de flux mélangés chaud et froid 33 en aval de cette extrémité aval. Cette fois, la zone d'implantation des portes 30' d'inverseur est telle qu'en position déployée, elles bloquent le canal de flux mélangés 33 de sorte que, aux fuites près (lesquelles peuvent d'ailleurs être volontairement ménagées), toute la poussée est inversée selon la flèche F3. Les portes 30' peuvent appartenir, par exemple, soit, comme il est représenté sur la figure, à un inverseur à deux portes "amont" tel que décrit et représenté dans le brevet français n° 86 09838 de la Déposante, soit un inverseur PERT (marque de la Déposante), tel que décrit et revendiqué dans le brevet français n°97 06780, au nom de la Déposante également.

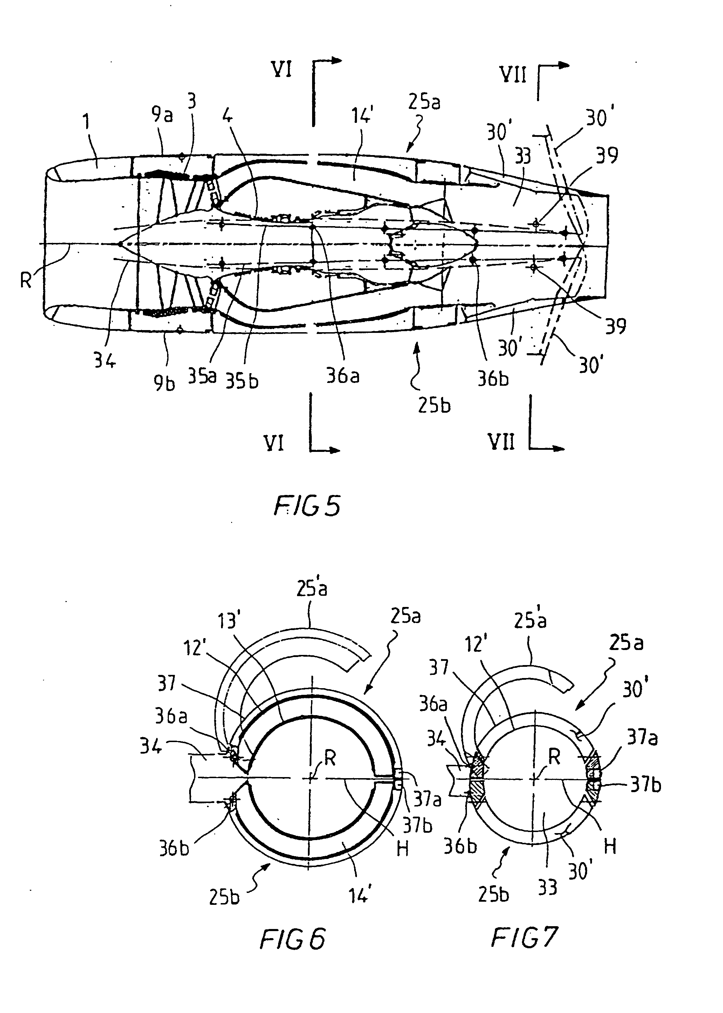

Les figures 5, 6 et 7 montrent une quatrième forme d'exécution appliquée au cas d'un moteur installé en nacelle latérale.

Dans ce cas, le plan de séparation de l'arrière-corps unitaire en deux parties, sensiblement symétriques, est un plan sensiblement horizontal.

Dans la coupe de la figure 5, on retrouve les mêmes éléments que dans la vue en perspective des figures 4a et 4b, l'inverseur étant de nouveau implanté de telle manière qu'il agisse sur le mélange de flux. Les portes 30' sont représentées en position escamotée en trait plein, et en position déployée en pointillés. On voit, en 39, les axes de pivotement des deux portes 30'. L'inverseur peut, comme précédemment, être de type à deux portes "amont" ou être un inverseur PERT.

L'intérêt des figures 5 à 7 est de montrer plus lisiblement l'implantation des charnières et que le nombre de peaux passe de trois à deux, de l'amont vers l'aval, dans l'arrière-corps unitaire.

Comme on le voit aux figures 5 à 7, la nacelle est montée sur un pylône 34 solidarisé au fuselage arrière de l'avion. Sur ce pylône, sont définis deux axes d'articulation 35a, 35b sur lesquels sont alignées deux séries de charnières 36a, 36b (cinq paires dans la forme d'exécution illustrée). Ces charnières sont situées de part et d'autre d'un plan sensiblement horizontal H qui contient l'axe R du réacteur. A l'opposé des charnières, les deux moitiés d'arrière-corps unitaire 25a,b comportent des verrous 37a, 37b pour fermer ledit arrière-corps. Aux figures 6 et 7, la moitié supérieure 25a de l'arrière-corps est représentée ouverte en traits minces en 25a'. Les portes d'inverseur 30' sont signalées sur la coupe de la figure 7.

Comme on le voit, au niveau de la coupe selon la ligne VI-VI de la figure 5 (figure 6), l'arrière-corps unitaire 25 comporte, de l'extérieur vers l'intérieur, la surface nacelle 37, la surface extérieure 12' du canal de soufflante et la surface intérieure 13' du canal de soufflante, alors qu'au niveau de la coupe selon la ligne VII-VII de la figure 5 (figure 7), il n'y a plus que les surfaces 37 et 12'.

L'arrière-corps unitaire 25a,b passe donc de ce qu'il est convenu d'appeler une configuration en deux demi-conduits en "D-ducts" à une configuration en deux demi-conduits en "C-ducts". Il est donc de type "D/C-ducts".

Il est bien entendu que, comme dans le cas de l'arrière-corps de nacelle sous voilure illustré aux figures 3a et 3b, l'inverseur pourrait être implanté dans l'arrière-corps unitaire de la nacelle latérale à un niveau tel qu'il agisse sur le flux froid seulement.

Bien que, dans les formes d'exécution décrites et représentées ci-dessus, l'arrière-corps unitaire comporte toujours un inverseur de poussée, l'invention couvre également les cas où aucun inverseur n'est implanté dans ledit arrière-corps : il est en effet envisageable, notamment, d'équiper un avion de quatre nacelles sous voilure, deux de chaque côté du fuselage, et dont seules les nacelles proches du fuselage seront munies d'inverseur.

## Revendications

1. Arrière-corps de nacelle de réacteur d'avion, du type comportant une tuyère commune (6) pour l'échappement des gaz chauds et froids mélangés provenant respectivement du canal de soufflante (14a,b ; 14') et de la chambre de combustion (4) du réacteur, ladite tuyère ayant un axe longitudinal se confondant sensiblement avec l'axe R dudit réacteur, **caractérisé en ce que** la tuyère commune d'échappement est constituée de deux demi-tuyères (6a,6b) sensiblement symétriques par rapport à un plan contenant ledit axe longitudinal, lesdites demi-tuyères (6a,6b) étant, d'une part, individuellement articulées par l'un de leurs bords longitudinaux sur une structure support (26 ; 34) dépendant de la voilure ou du fuselage de l'avion et, d'autre part, verrouillables entre elles le long de leurs bords longitudinaux opposés.

2. Arrière-corps selon la revendication 1 dans lequel le canal de soufflante (14a,b ; 14') se compose de deux demi-canaux de soufflante dont chacun est défini entre une peau extérieure (12 ; 12') et une peau intérieure (13 ; 13') appartenant à un demi-capotage, les deux demi-capotages étant sensiblement symétriques par rapport à un plan contenant ledit axe longitudinal et étant, d'une part, individuellement articulés par l'un de leurs bords longitudinaux sur ladite structure support (26 ; 34) et, d'autre part, verrouillables entre eux le long de leurs bords longitudinaux opposés, **caractérisé en ce que** chaque demi-capotage et chaque demi-tuyère se faisant suite sont d'un seul tenant (25a ; 25b).

3. Arrière-corps selon la revendication 2,
**caractérisé en ce qu'**il délimite à la fois un canal de gaz froids (14') et un canal de gaz mélangés chauds et froids (33) et **en ce qu'**il comporte, en outre, un inverseur de poussée à portes implanté à un niveau tel, qu'en position déployée, les portes (30) bloquent uniquement le flux des gaz froids.

4. Arrière-corps selon la revendication 2,
**caractérisé en ce qu'**il délimite à la fois un canal de gaz froids (14') et un canal de gaz mélangés chauds et froids (33) et **en ce qu'**il comporte, en outre, un inverseur de poussée à portes implanté à un niveau tel, qu'en position déployée, les portes (30') bloquent le flux des gaz mélangés chauds et froids.

5. Arrière-corps de nacelle longue à flux mélangés pour réacteur d'avion comportant une zone amont et une zone aval par référence au sens d'écoulement des gaz, **caractérisé en ce qu'**il est constitué en deux parties sensiblement symétriques par rapport à un plan contenant l'axe longitudinal R du réacteur, lesdites parties étant, d'une part, individuellement articulées par l'un de leurs bords longitudinaux sur une structure support (26 ; 34) dépendant de la voilure ou du fuselage de l'avion et, d'autre part, verrouillables entre elles le long de leurs bords longitudinaux opposés, chacune des desdites parties comportant de l'extérieur vers l'intérieur, en zone amont, trois surfaces aérodynamiques, à savoir une surface extérieure de nacelle (37), une surface extérieure de canal de flux froid (12') et une surface intérieure de canal de flux froid (13') et, en zone aval, deux surfaces aérodynamiques, à savoir une surface extérieure de nacelle (37) et une surface de flux mélangés chaud et froid (12').

## Patentansprüche

1. Gondelheckteil für ein Flugzeug-Strahltriebwerk mit einer gemeinsamen Schubdüse (6) für den Austritt der vom Gebläsekanal (14a, 14b; 14') bzw. von der Verbrennungskammer (4) des Strahltriebwerks kommenden gemischten heißen und kalten Gase, wobei die Schubdüse eine Längsachse aufweist, die im wesentlichen mit der Achse R des Strahltriebwerks zusammenfällt, **dadurch gekennzeichnet, daß** die gemeinsame Schubdüse aus zwei Düsenhälften (6a, 6b) besteht, die im wesentlichen bezüglich einer die Längsachse enthaltenden Ebene symmetrisch sind und die einerseits an einem ihrer Längsränder einzeln an einer vom Tragwerk oder vom Rumpf des Flugzeugs abhängenden Tragstruktur (26; 34) angelenkt sind und andererseits längs ihrer entgegengesetzten Längsränder aneinander verriegelbar sind.

2. Heckteil nach Anspruch 1, bei dem der Gebläsekanal (14a, b; 14') aus zwei Gebläsekanalhälften besteht, deren jede zwischen einer Außenhaut (12; 12') und einer Innenhaut (13; 13'), die zu einer Verkleidungshälfte gehören, abgegrenzt ist, wobei die beiden Verkleidungshälften im wesentlichen bezüglich einer die Längsachse enthaltenden Ebene symmetrisch sind und einerseits an einem ihrer Längsränder einzeln an der Tragstruktur (26; 34) angelenkt sind und andererseits längs ihrer entgegengesetzten Längsränder aneinander verriegelbar sind, **dadurch gekennzeichnet, daß** jede Verkleidungshälfte und jede Düsenhälfte, die aufeinander folgen, einstückig (25a; 25b) ausgeführt sind.

3. Heckteil nach Anspruch 2, **dadurch gekennzeichnet, daß** er gleichzeitig einen Kanal (14') für kalte Gase und einen Kanal (33) für gemischte heiße und kalte Gase begrenzt und daß er außerdem eine Schubumkehrvorrichtung mit Klappen aufweist, die auf einer solchen Höhe angeordnet ist, daß die Klappen (30) in ausgeklappter Stellung nur den Strom der kalten Gase blockieren.

4. Heckteil nach Anspruch 2, **dadurch gekennzeichnet, daß** er gleichzeitig einen Kanal (14') für kalte Gase und einen Kanal (33) für gemischte heiße und kalte Gase abgrenzt und daß er außerdem eine Schubumkehrvorrichtung mit Klappen aufweist, die auf einer solchen Höhe angeordnet ist, daß die Klappen (30') in ausgeklappter Stellung den Strom der gemischten heißen und kalten Gase blockieren.

5. Heckteil einer langen Gondel mit gemischten Strömen für ein Flugzeug-Strahltriebwerk mit einer in Strömungsrichtung der Gase stromauf gelegenen Zone und einer stromab gelegenen Zone, **dadurch gekennzeichnet, daß** er aus zwei Teilen besteht, die im wesentlichen bezüglich einer die Längsachse R des Strahltriebwerks enthaltenden Ebene symmetrisch sind und die einerseits an einem ihrer Längsränder einzeln an einer vom Tragwerk oder vom Rumpf des Flugzeugs abhängenden Tragstruktur (26; 34) angelenkt sind und andererseits längs ihrer entgegengesetzten Längsränder aneinander verriegelbar sind, wobei jeder dieser Teile von außen nach innen in der stromauf gelegenen Zone drei ärodynamische Flächen, und zwar eine Gondelaußenfläche (37), eine Außenfläche (12') des Kanals für den kalten Strom und eine Innenfläche (13') des Kanals für den kalten Strom, und in der stromab gelegenen Zone zwei ärodynamische Flächen, und zwar eine Gondelaußenfläche (37) und eine Fläche (12') des gemischten kalten und heißen Stroms aufweist.

## Claims

1. Aeroengine nacelle afterbody of the type comprising a common nozzle (6) for exhausting the mixed hot and cold gases originating respectively from the fan duct (14a, b; 14') and from the aeroengine combustion chamber (4), the said nozzle having a longitudinal axis more or less coincident with the axis R of the said engine, **characterized in that** the common exhaust nozzle consists of two half-nozzles (6a, 6b) which are more or less symmetric with respect to a plane containing the said longitudinal axis, the said half-nozzles (6a, 6b) being, on the one hand, individually hinged via one of their longitudinal edges to a support structure (26; 34) hanging down from the wing structure or from the fuselage of the aircraft and, on the other hand, lockable together along their opposite longitudinal edges.

2. Afterbody according to Claim 1, in which the fan duct (14a, b; 14') is made up of two fan half-ducts, each of which is defined between an exterior skin (12; 12') and an interior skin (13; 13') belonging to a half-fairing, the two half-fairings being more or less symmetric with respect to a plane containing the said longitudinal axis, and being, on the one hand, individually hinged via one of their longitudinal edges to the said support structure (26; 34) and, on the other hand, lockable together along their opposite longitudinal edges, **characterized in that** each half-fairing and each half-nozzle following on one from the other are made as a single piece (25a; 25b).

3. Afterbody according to Claim 2, **characterized in that** it delimits both a duct (14') for cold gases and a duct (33) for mixed hot and cold gases, and **in that** it further comprises a door-type thrust reverser situated in such a location that, in the deployed position, the doors (30) block only the flow of the cold gases.

4. Afterbody according to Claim 2, **characterized in that** it delimits both a duct (14') for cold gases and a duct (33) for mixed hot and cold gases, and **in that** it further comprises a door-type thrust reverser situated in such a location that, in the deployed position, the doors (30') block the flow of the mixed hot and cold gases.

5. Long duct mixed flow nacelle afterbody for an aeroengine comprising an upstream zone and a downstream zone by reference to the direction in which the gases flow, **characterized in that** it consists of two parts which are more or less symmetric with respect to a plane containing the longitudinal axis R of the aeroengine, the said parts being, on the one hand, individually hinged by one of their longitudinal edges to a support structure (26; 34) hanging down from the wing structure or from the fuselage of the aircraft and, on the other hand, lockable together along their opposite longitudinal edges, each of the said parts comprising, from the outside inwards, in the upstream zone, three aerodynamic surfaces, namely a nacelle exterior surface (37), a cold flow duct exterior surface (12') and a cold flow duct interior surface (13') and, in the downstream zone, two aerodynamic surfaces, namely a nacelle exterior surface (37) and a mixed hot and cold flow surface (12').
